(19) Europäisches Patentamt
European Patent Office
Office européen des brevets

(11) Publication number: 0 001 562
B1

(12) # EUROPEAN PATENT SPECIFICATION

(45) Date of publication of patent specification: 14.04.82

(51) Int. Cl.³: C 08 G 79/02

(21) Application number: 78100952.7

(22) Date of filing: 22.09.78

(54) A process for producing alkoxy and/or aryloxy polyphosphazenes.

(30) Priority: 25.10.77 US 845009

(43) Date of publication of application:
02.05.79 Bulletin 79/9

(45) Publication of the grant of the patent:
14.04.82 Bulletin 82/15

(84) Designated Contracting States:
BE DE FR GB NL

(56) References cited:
DE - A - 2 706 771
DE - A - 2 708 319
DE - A - 2 712 542

HOUBEN—WEYL "Methoden der organischen Chemie" Band VI/1c, Phenole Teil 2 4. Auflage 1976
THIEME VERLAG, Stuttgart, page 1188 to 1189, page 1189, lines 1 to 2

(73) Proprietor: THE FIRESTONE TIRE & RUBBER COMPANY
1200 Firestone Parkway
Akron, Ohio 44317 (US)

(72) Inventor: Fieldhouse, John William
2454 Sunny Brook Road
Mogadora, Ohio 44260 (US)
Inventor: Graves, Daniel Frank
7176 Cleveland-Massillon Road
Clinton Ohio 44216 (US)
Inventor: Cole, William Max
3750 Alberta Drive
Norton Ohio 44203 (US)
Inventor: Stayer, Jr., Mark Lutz
1213 Cramer Drive
Suffield Ohio 44260 (US)
Inventor: Fenske, Steven Lee
1510 Plateau Street
Uniontown Ohio 44685 (US)

(74) Representative: Kraus, Walter, Dr. et al,
Patentanwälte Dres. Kraus & Weisert
Irmgardstrasse 15
D-8000 München 71 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 001 562 B1

# A process for producing alkoxy and/or aryloxy polyphosphazenes

This invention relates to a process for producing alkoxy and/or aryloxy polyphosphazenes represented by the general formula:

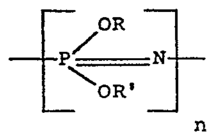

wherein each OR and OR′ represents at least one alkoxy or aryloxy group including groups with either saturated or unsaturated substituents and not all of the OR and OR′ groups are required to be the same, and n is an integer of between about 10 and about 50,000

wherein a solution of a linear dichlorophosphazene represented by the formula $(NPCl_2)m$ and m is an integer greater than 7 is reacted with a solution of an excess of at least one alkoxide or aryloxide represented by the formula NaOR or NaOR′, the solvents being so chosen that the reaction product comprises a solution of the polyphosphazene product;

and a solution of the desired polyphosphazene is produced along with NaCl as a by-product of the reaction;

and the resulting solution of polyphosphazene and sodium chloride is neutralized and hydrolyzed with an acid.

This invention relates especially to an improved process for the production of polyphosphazenes in which the substituents on the phosphorous atoms are those described in US—A 3.370.020; US—A 3.515.688; US—A 3.700.629; US—A 3.702.833; US—A 3,856.712; US—A 3.856.713; US—A 3.853.794; US—A 3.883.451; and/or US—A 3.970.533.

These patents describe the production of polyphosphazene products having the general formula:

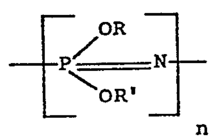

wherein R and R′ are each selected from the group consisting of alkyl, alkylaryl, aryl any of which may be either substituted or unsubstituted and need not be the same and n is an integer between about 20 and about 50,000 or more, and in which some of the R or R′ groups may contain some unsaturation to facilitate curing the products.

The above noted patents describe processes in which linear polydihalophosphazenes are derivatized by reaction with an alkali or alkaline earth compound represented by the general formula $M(OR)_x$ in which M represents lithium, sodium, potassium, magnesium or calcium; x is equal to the valence of M; and R represents an alkyl radical or an aryl radical either of which may be substituted, e.g., as described in US—A 3.370.020, the esterification step (see column 3 of the patent) has usually been conducted by bringing a solution of the polydihalophosphazene dissolved in an aromatic solvent into contact with a solution of the alkoxide or aryloxide dissolved in an entirely different solvent.

Solvents for the polydihalophosphazene reactant have usually been benzene, toluene, xylene or other similar aromatic hydrocarbons which are commercially readily available and are relatively inexpensive (see US—A 3.515.688, and the other above noted patents, for example).

A variety of solvents have been utilized for the alkoxide or aryloxide including: methanol disclosed in Example 2 of US—A 3.370.020; tetrahydrofuran disclosed in US—A 3.515.688; and ethers disclosed in US—A 3.883.541, noted above, but in every such reported synthesis in which the two reactants were brought together as solutions, two distinct and different solvents were utilized and the resulting derivatized product precipitates from the solutions being reacted, usually with entrapment of the metal halide by-product formed in the reaction. This results in a heterogeneous system in which the reacting solutes are in contact with each other for only limited times, with consequent adverse effect on yields of the desired esters. In addition, it has been found that complete substitution of P—Halogen bonds is very difficult to achieve in a heterogeneous system, and is relatively simple to achieve in a homogeneous system.

An improvement in such processes is described in EP—A 10.000.790. This process comprises the provision of a single solvent for both the polydihalophosphazene reactant and the alkoxide and/or aryloxide reactants and which is also a solvent for the desired ester product and which is a non-solvent for the inorganic halide by-product, i.e., the alkali metal halide or alkaline earth halide formed as the other reaction product.

The prior art methods of work-up of phosphazene polymer reaction mixtures in order to remove the sodium chloride by-product involve neutralization with strong acids as described in US—A 3.370.020, DE—A 2.708.319 and DE—A 2.712.542.

Aside from this, Houben-Wayl "Methoden der organischen Chemie" Band VI/1c, Phenole Teil 2, 4. Auflage 1976, page 1189, lines 1/2 describes the liberation of phenols and alkyl phenols from their alkaline solutions by treating with carbon dioxide.

The object of the invention is to provide a process for producing alkoxy and/or aryloxy phosphazene polymers or copolymers in which the quality of the product is improved by rapid neutralization of the highly basic excess aryloxide and/or alkoxide usually present when the reaction is effected. The invention contemplates especially to simplify the separation of the inorganic halide (NaCl) from the solution of the polyphosphazene derivative formed during said reaction between one or more sodium aryloxides or alkoxides and polydichlorophosphazene in solution. This object is accomplished by the invention by employing $CO_2$ and water in an amount sufficient to neutralize the alkoxide or aryloxide present in said resulting solution as the acid and subsequently to the neutralization and hydrolysis;

treating the solution of polyphosphazene containing NaCl with a solution of an alkali metal salt with a density in the crystalline state greater than the density of NaCl in the crystalline state in order to improve the separation of the sodium chloride by-product from the derivatisized phosphazene polymer; and

recovering the resulting aliphatic or aromatic alcohol produced by hydrolysis of the NaOR or NaOR' and by hydrolytic decomposition of the intermediate sodium aryl carbonate or sodium alkyl carbonate present in said solution.

The neutralization of the excess alkali metal alkoxide or aryloxide with carbon dioxide and water according to the invention is advantageous when compared with the prior art use of a strong acid such as hydrochloric acid. Further, the improved separation of sodium chloride from the polymer mixture according to the invention is also the result of the use of the alkali metal salt solution which causes agglomeration of the sodium chloride by-product and therefore makes it easier to separate this by-product from the polymer mixture.

The invention is applicable to such derivatization processes in which the polydihalophosphazene starting material is polydichlorophosphazene and the alkoxy and/or aryloxy starting materials are in the form of their sodium salts, and as a consequence the metal halide by-product of their reaction with each other is NaCl. The present invention is particularly applicable to the improved derivatization process described in EP—A 10.000.790.

Examples of alkali metal salts suitable for the inventive process are alkali bromide, e.g., sodium bromide, and alkali metal carbonates or bicarbonates.

One way of carrying out the invention is described in detail below with reference to the following example.

## Example

A solution of linear polydichlorophosphazene $(NPCl_2)n$ $(n > 7)$ in THF (5—10% $(NPCl_2)n$ by weight) was prepared after the lower molecular weight cyclic oligomers had been removed from the linear polydichlorophosphazene by known purification procedures such as solvent extraction or sublimation, as described in the open literature. A small amount of an amine, e.g., diphenylamine was added to inhibit the formation of poly-tetrahydrofuran in the solution of linear polydihalophosphazene.

Sixty grams (1.03 mol) of polydichlorophosphazene in 590 g (a 9.2% solution) of tetrahydrofuran (distilled from sodium) was pressurized into a 3 liter glass reactor under nitrogen into a THF solution of 584 g of 2.00 millimoles sodium fluoroalkoxides per gram of solution (1.17 moles sodium fluoroalkoxide) which had previously been charged.

The contents of the reactor were stirred for three hours at 60—65°C and then cooled to 25—30°C. Excess sodium fluoroalkoxides present in the reaction mixture were then neutralized with carbon dioxide followed by addition of 45 g of a 10 weight percent solution of sodium bromide in water, resulting in agglomeration of the finely divided sodium chloride. The sodium chloride was then filtered or removed by centrifugation. The volatile tetrahydrofuran was then removed by a solvent evaporator, for reuse. Traces of fluoroalcohol were then removed at a higher temperature (100—110°C) for 20 hours at 5 mm Hg giving 130 g of a dry elastomeric poly(fluoroalkoxyphosphazene), with the following typical analysis: Dilute Solution Viscosity—2.61; % Gel—0.0; Weight Percent Sodium—0.11; Weight Percent Chloride—0.06.

In the Table which follows, results of the use of water alone, and combinations of water, $CO_2$ and various alkali metal salts for enhancing the separation of NaCl from the reaction products, are illustrated.

TABLE

| Treatment | Agglomeration | % Gel | % Na* | % Cl * |
|---|---|---|---|---|
| 1. $H_2O$ (3) | Fair / Poor | 0.0 | 0.7 | 1.08 |
| 2. $CO_2/H_2O$ (5) | Poor / Excellent | 2.0 | 0.48 | 0.59 |
| 3. $CO_2KHCO_3$ (1) | Fair | 3.1 | 0.24 | 0.31 |
| 4. $CO_2/H_2O/KHCO_3$ (2) | Good / Excellent | 0.0 | 0.27 | 0.47 |
| 5. $CO_2/H_2O/K_2CO_3$ (2) | Excellent | 0.0 | 0.19 | 0.11 |
| 6. $CO_2/H_2O/LiBr$ (1) | Excellent | 0.0 | 0.03 | 0.04 |
| 7. $CO_2/H_2O/KCl$ (3) | Fair / Excellent | 0.0 | 0.35 | 0.36 |
| 8. $CO_2/H_2O/KBr$ (2) | Good / Excellent | 0.0 | 0.45 | 0.67 |
| 9. $CO_2/H_2O/NaBr$ (33) | Excellent | 0.0 | 0.16 | 0.16 |

* present in recovered polyphosphazene.

The results reported are an average of several individual runs. The number of runs being averaged is indicated by the figure in parenthesis.

The amount of $CO_2$ added to the solution should be sufficient to neutralize any excess sodium aryloxide and/or sodium alkoxide present and to reduce the pH of the resulting solution to about 7.0—7.5.

The amount of 10% alkali metal salt solution added to the neutralized solution, to enhance agglomeration of the NaCl is suitably between about 2.5 and 6.0 parts by weight per 100 parts by weight of the solution, about 4.0 parts being optimum.

## Claims

1. A process for producing alkoxy and/or aryloxy polyphosphazenes represented by the general formula:

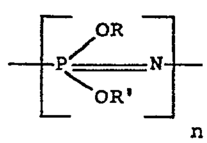

wherein each OR and OR′ represents at least one alkoxy or aryloxy group including groups with either saturated or unsaturated substituents and not all of the OR and OR′ groups are required to be the same, and n is an integer of between about 10 and about 50,000

wherein a solution of a linear dichlorophosphazene represented by the formula $(NPCl_2)m$ and m is an integer greater than 7 is reacted with a solution of an excess of at least one alkoxide or aryloxide represented by the formula NaOR or NaOR′, the solvents being so chosen that the reaction product comprises a solution of the polyphosphazene product;

and a solution of the desired polyphosphazene is produced along with NaCl as a by-product of the reaction;

and the resulting solution of polyphosphazene and sodium chloride is neutralized and hydrolyzed with an acid;

characterized by employing $CO_2$ and water in an amount sufficient to neutralize the alkoxide or aryloxide present in said resulting solution as the acid and subsequently to the neutralization and hydrolysis;

treating the solution of polyphosphazene containing NaCl with a solution of an alkali metal salt with a density in the crystalline state greater than the density of NaCl in the crystalline state in order to improve the separation of the sodium chloride by-product from the derivitized phosphazene polymer; and

recovering the resulting aliphatic or aromatic alcohol produced by hydrolysis of the NaOR or NaOR′ and by hydrolytic decomposition of the intermediate sodium aryl carbonate or sodium alkyl carbonate present in said solution.

2. The process of Claim 1 wherein the alkali metal salt is an alkali metal bromide.

3. The process of Claim 1 wherein the alkali metal salt is NaBr.

4. The process of Claim 1 wherein the alkali metal salt is a carbonate or bicarbonate.

5. The process of Claim 1 wherein the alcohol or phenol is recovered by solvent stripping.

6. The process of Claim 1 wherein the NaCl is separated by centrifuging.

7. The process of Claim 1 wherein the NaCl is separated by filtration.

**Revendications**

1. Procédé de production de polymères d'alcoxy et/ou aryloxy phosphazène représentés par la formule générale ciaprès:

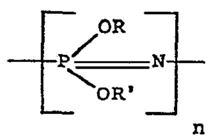

dans laquelle chacun des radicaux OR et OR′ représente au moins un groupe alcoxy ou aryloxy comprenant des groupes portant des substituants saturés ou non, tous les groupes OR et OR′ n'ayant pas besoin d'être identiques, et n étant un untier compris entre environ 10 et 50,000,

procédé selon lequel l'on fait réagir une solution d'un dichlorophosphazène linéaire représenté par la formule $(NPCl_2)_m$ dans laquelle m est un entier supérieur à 7. avec une solution d'un excès d'au moins un alcoolate ou phénolate représenté par la formule NaOR ou NaOR′, les solvants étant choisis de telle sorte que le produit de réaction constitue une solution du polyphosphazène produit;

une solution du polyphosphaze recherché est alors produite avec du NaCl à titre de sous-produit de la réaction;

et l'on neutralise et hydrolyse avec un acide, la solution résultante de polyphosphazène et de chlorure de sodium,

caractérisé en ce qu'on utilise comme acide du $CO_2$ et de l'eau en quantité suffisante pour neutraliser l'alcoolate ou le phénolate présent dans la solution résultante et réaliser ensuite la neutralisation et l'hydrolyse;

que l'on traite la solution de polyphosphazène contenat du NaCl avec une solution d'un sel de métal alcalin ayant une densité à l'état cristallin supérieure à celle du NaCl à l'état cristallin, afin d'ameliorer la séparation du chlorure de sodium sous-produit.

2. Procédé selon la revendication 1, caractérisé en ce que le sel de métal alcalin est un bromure de métal alcalin.

3. Procédé selon la revendication 1, caractérisé en ce que le sel de métal alcalin est du NaBr.

4. Procédé selon la revendication 1, caractérisé en ce que le sel de métal alcalin est un carbonate ou un bicarbonate.

5. Procédé selon la revendication 1, caractérisé en ce que l'alcool ou le phénol est récupéré au cours d'une procédure de séparation par solvant.

6. Procédé selon la revendication 1, caractérisé en ce que le NaCl est séparé par centrifugation.

7. Procédé selon la revendication 1, caractérisé en ce que le NaCl est séparé par filtration.

**Patentansprüche**

1. Verfahren zur Herstellung von Alkoxy- und/oder Aryloxypolyphosphazenen der allgemeinen Formel:

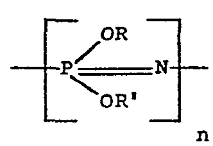

worin jede Gruppe OR und OR′ für mindestens eine Alkoxy- oder Aryloxygruppe mit Einschluß von Gruppen mit entweder gesättigten oder ungesättigten Substituenten steht und nicht alle Gruppen OR und OR′ die gleichen zu sein brauchen, und n eine ganze Zahl von zwischen etwa 10 und etwa 50000 ist, wobei eine Lösung eines linearen Dichlorphosphazens der Formel $(NPCl_2)_m$, wobei m eine ganze Zahl ist, die größer als 7 ist, mit einer Lösung eines Überschusses von mindestens einem Alkoxid oder Aryloxid der Formel NaOR oder NaOR′ umgesetzt wird, wobei die Lösungsmittel so ausgewählt werden,

daß das Reaktionsprodukt eine Lösung des Polyphosphazenprodukts umfaßt, und eine Lösung des gewünschten Polyphosphazens zusammen mit NaCl als Nebenprodukt der Reaktion gebildet wird, und wobei die resultierende Lösung des Polyphosphazens und des Natriumchlorids neutralisiert und mit einer Säure hydrolysiert wird, dadurch gekennzeichnet, daß man $CO_2$ und Wasser als Säure in einer Menge verwendet, die ausreichend ist, um das in der resultierenden Lösung vorhandene Alkoxid oder Aryloxid zu neutralisieren, und daß man nach der Neutralisation und Hydrolyse die NaCl enthaltende Lösung des Polyphosphazens mit einer Lösung eines Alkalimetallsalzes mit einer Dichte im kristallinen Zustand, die größer ist als die Dichte von NaCl im kristallinen Zustand, behandelt, um die Abtrennung des Natriumchlorid-Nebenprodukts zu verbessern.

2. Verfahren nach Anspruch 1, dadurch gekennzeichnet, daß das Alkalimetallsalz ein Alkalimetallbromid ist.

3. Verfahren nach Anspruch 1, dadurch gekennzeichnet, daß das Alkalimetallsalz NaBr ist.

4. Verfahren nach Anspruch 1, dadurch gekennzeichnet, daß das Alkalimetallsalz ein Carbonat oder Bicarbonat ist.

5. Verfahren nach Anspruch 1, dadurch gekennzeichnet, daß der Alkohol oder das Phenol durch Lösungsmittelabstreifen wiedergewonnen wird.

6. Verfahren nach Anspruch 1, dadurch gekennzeichnet, daß das NaCl durch Zentrifugieren abgetrennt wird.

7. Verfahren nach Anspruch 1, dadurch gekennzeichnet, daß das NaCl durch Filtrieren abgetrennt wird.